**Europäisches Patentamt**

**European Patent Office**

**Office européen des brevets**

(19)

(11) Veröffentlichungsnummer: **0 083 751**
**B1**

# EUROPÄISCHE PATENTSCHRIFT

(12)

(45) Veröffentlichungstag der Patentschrift:
26.02.86

(21) Anmeldenummer: **82111553.2**

(22) Anmeldetag: **13.12.82**

(51) Int. Cl.⁴: **B 65 G 47/54**

(54) **Vorrichtung zum Transport von Profilen und Flacherzeugnissen.**

(30) Priorität: **09.01.82 DE 3200495**

(43) Veröffentlichungstag der Anmeldung:
**20.07.83 Patentblatt 83/29**

(45) Bekanntmachung des Hinweises auf die Patenterteilung:
**26.02.86 Patentblatt 86/9**

(84) Benannte Vertragsstaaten:
**AT BE CH DE FR GB IT LI NL SE**

(56) Entgegenhaltungen:
**DE - A - 2 505 436**
**US - A - 3 591 023**
**US - A - 3 917 078**
**US - A - 4 042 118**

(73) Patentinhaber: **Jägers, Leopold,**
**Rudolf-Diesel-Strasse 1, D-5350 Euskirchen (DE)**

(72) Erfinder: **Jägers, Leopold, Rudolf-Diesel-Strasse.1,**
**D-5350 Euskirchen (DE)**

(74) Vertreter: **Patentanwaltsbüro Cohausz & Florack,**
**Postfach 14 01 47, D-4000 Düsseldorf 1 (DE)**

EP 0 083 751 B1

## Beschreibung

Die Erfindung betrifft eine Vorrichtung zum waagerechten Transport von langgestreckten Gütern wie Profilen und Fladierzeugnissen insbesondere von Stäben, und Blechen quer zu ihrer Längsrichtung mit quer zur Längsrichtung in Abständen zueinander parallel angeordneten Trägern, deren Länge etwa dem Transportweg entspricht und auf die die langgestreckten Güter ablegbar sind, und mit parallel zu den Trägern, insbesondere neben jedem Träger über etwa dieselbe Länge angeordneten, in der Höhe verstellbaren Führungsprofilen, an oder auf denen Wagen oder Schlitten längs des Führungsprofils beweglich geführt und durch ein Zugmittel, insbesondere eine Kette gezogen werden (US—A—3917078).

Um Profile, wie ZB auch Trägen, zu Bearbeitungsmaschinen, wie Sägen und Bohrmaschinen, zu bringen, ist es bekannt, diese in Längsrichtung zu befördern. Zwischen den Maschinen müssen seitlich von den Förderanlagen Ablegemöglichkeiten für das Material bestehen, so daß das Material seitlich, d.h. quer zur Längsrichtung, befördert werden muß. Hierzu sind Vorrichtungen der eingangs gennannten Art aus einem Faltblatt der Firma Promabeam vom Oktober 1981 bekannt. Die Wagen dieser Vorrichtung bewegen sich gegenüber der Kette senkrecht auf und ab, so daß das am Wagen befindliche Kettentrum bei einer ausreichenden Kettenspannung stark zusätzlich gespannt und damit sehr belastet wird.

Aus der US—A—3 917 078 ist es bekannt, den für die Wagen erforderlichen Antrieb mit anzuheben. Eilne bewegliche Lagerung der Antriebe ist aufwendig und bei dem üblicherweise rauhen Betrieb störanfällig. Eine andere Ausführungsform dieser Konstruktion ist aus der US—PS 4 042 118 bekannt.

Aufgabe der Erfindung ist es, eine Vorrichtung der eingangs genannten Art derart zu verbessern, daß eine zusätzliche Belastung des den Wagen transportierenden Zugmittels und seiner Ankopplung verhindert wird.

Diese Aufgabe wird erfindungsgemäß dadurch gelöst, daß seitlich am Wagen oder Schlitten eine einarmige Schwinge angelenkt ist, deren waagerechte Anlenkachse rechtwinklig zur Fahrtrichtung des Wagens liegt und an deren freiem Ende das Zugmittel befestigt ist, und daß die Schwinge bei Anheben des Wagens nach unten gegen einen am Wagen befestigten Anschlag schwenkbar ist.

Die am Wagen drehbewegliche Schwinge hält die Befestigungsstelle für das Zugmittel stets in derselben Höhe, unabhängig von der Höhenstellung des Wagens, so daß das Zugmittel geringere Spannungen erfährt. Damit ist das Zugmittel keinen zusätzlichen Beanspruchungen ausgesetzt, so daß der Verschleiß gering gehalten wird.

Obwohl die Bauhöhe des Wagens gering gehalten wird, wird eine sichere Befestigung und Führung der Befestigungsstelle für das Zugmittel am Wagen geschaffen. Auch kann die Schwinge stoßartige Belastungen aufnehmen, wie sie beim Fahren eines Wagens gegen zu transportierendes Material geschehen, um dieses Material auszurichten. Eine solche Schwinge ist konstruktiv einfach, preiswert herstellbar und kann hohe Belastungen, insbesondere Stoßbelastungen aufnehmen. Der Verschleiß ist dabei sehr gering.

Im Gegensatz zu einer senkrechten gleitenden Führung der Befestigungsstelle am Wagen erfordert die Schwinge keine zusätzliche Bauhöhe des Wagens. In der unteren Stellung der Schwinge werden stoßartige Belastungen zum Teil vom Anschlag mit übernommen, so daß die Schwingenanlenkstelle entlastet wird. Dies ist in der unteren Schwingenstellung von großer Bedeutung, da dann der Wagen angehoben ist und in der Weise benutzt werden kann, daß gegen Träger stoßend gefahren wird.

Eine ausreichende Stabilität bei geringen Abmessungen des Wagens in der Breite wird dann erreicht, wenn die Schwinge von einer Platte gebildet ist, die parallel zur Seitenwandung des Wagens liegt. Ein seitlicher Halt wird dem freien Schwingenende dadurch gegeben, daß am freien Ende der Schwinge auf der der Seitenwand des Wagens abgewandten Seite eine am Wagen befestigte Anschlagsfläche angeordnet ist. Dabei kann der am Wagen befestigte Anschlag und/oder die am Wagen befestigte Fuhrungsfläche von einer Tasche der Wagenseitenflächen gebildet sein. Ferner wird vorgeschlagen, daß die Schwinge um einen Drehwinkel von 4 bis 20 Grad, insbersondere 6 bis 12 Grad, verschwenkbar ist.

Eine preiswerte Konstruktion bei hoher Robustheit wird dadurch geschaffen, wenn die Träger, auf denen die zu transportierenden Profile und Flacherzeugnisse ablegbar sind, Doppel-T-Träger sind. Dabei kann die Kette im seitlichen Zwischenraum des Trägers zwischen Seinemoberem und sernem unteren Flansch geführt sein. Hierdurch wird erreicht, daß das Zugmittel, insbesondere eine Kette, nicht verschmutzt, nicht durch herunterfallende Teile beschädigt werden kann und die Unfallgefahr verringert wird.

Eine konstruktiv einfache, sehr widerstandsfähige und sicher arbeitende Vorrichtung zum Anheben der Führungsprofile wird dadurch geschaffen, daß die Führungsprofile durch eine Parallelkurbel höhenverstellbar sind, deren Koppel ständig parallel zum Führungsprofil verläuft. Dabei kann die Koppel oberhalb der Gelenkstellen der Kurbeln und unterhalb des Führungsprofils angeordnet sein. Hierdurch wird auch der Platzbedarf verringert.

Ferner wird vorgeschlagen, daß die Anlenkstellen zwischen der Koppel und den Kurbeln Rollen tragen, die an der Unterseite des Führungsprofils anliegen. Auch kann an eine der Kurbeln zu ihrer Betätigung ein Zylinder-Kolben-Aggregat angelenkt sein.

Ein Ausführungsbeispiel der Erfindung ist in den Zeichrung schematisch dargestellt und wird im folgenden näher beschrieben Es zeigen:

Fig. 1 eine Seitenansicht der Vorrichtung bei abgesenktem Wagen oder Schlitten in einem Ausschrett;

Fig 2 einen Schnitt nach II—II in Figur 1; und

Fig. 3 und 4 eine Seitenansicht und einen Schnitt entsprechend Fig. 1 und 2 mit angehobenen Wagen oder Schlitten.

Die Vorrichtung zum waagerechten Materialtransport von Profilen oder Flacherzeugnissen quer zu ihrer Längsrichtung ist häufig an eine Rollenbahn angeschlossen und durchdringt diese in Querrichtung, so daß die Vorrichtung auf einer Rollenbahn ankommende Profile von der Rollenbahn abhebt und quer zu dieser auf waagerechten Trägern 1 lagert, von denen mehrere nebeneinander und zueinander parallel rechtwinklig zur Rollenbahn angeordnet sind. Die Träger 1 bestehen aus Doppel-T-Stahlprofilen, deren Steg senkrecht steht und deren Oberseite, auf der das Material abgelegt wird, mit der Oberseite der Rollenbahn fluchtet.

Jeder Träger 1 ist an beiden Enden jeweils von einem Gehäuse 2 getragen, in dem jeweils eine Kurbel 3 angelenkt ist, deren Gelenkstelle 4 tiefer als der Träger 1 liegt und deren waagerechte Achse rechtwinklig zur Träger-längsachse ist. Die in beiden Gehäusen 2 in gleicher Weise angelenkten und beweglichen Kurbeln 3 sind mit ihren freien Enden an einen waagerechten Stab, Träger bzw. Koppel 5 angelenkt, die mit den beiden Kurbeln 3 eine Parallelkurbel bilden. Eine der beiden Kurbeln wird durch ein angelenktes, hydraulisch beaufschlagtes Zylinder-Kolben-Aggregat (nicht gezeigt) bewegt.

Beide Anlenkstellen zwischen den Kurbeln 3 und der Koppel 5 tragen Rollen 6, die wiederum ein oberhalb angeordnetes Führungsprofil 7 stützen. Durch Betätigung des Zylinder-Kolben-Aggregats ist über die Parallelkurbeln das waagerechte und zum Träger 1 parallele Führungsprofil 7 anheb- und absenkbar. Das Profil 7 weist eine geringere Höhe auf als der Träger 1, und seine Oberseite liegt so viel niedriger als die Oberseite des Trägers 1, daß ein auf dem Profil 7 längs geführter Wagen 8 mit seiner Oberseite bei abgesenktem Profil 7 niedriger liegen kann als die Oberseite des Trägers 1. Hierdurch können auf den Trägern 1 liegende Profile vom Wagen 8 unterfahren und durch Anheben des Profils 7 von der Oberseite des Wagens 8 angehoben und quer zu ihrer Längsrichtung transportiert werden.

Der Wagen 8 läuft mit vier senkrechten Rollen 9 auf dem unteren Flansch des Profils 7 und vier waagerechten Rollen 10 am senkrechten Steg des Profils 7 und wird von einer waagerecht umlaufenden Kette 11 in beide Fahrtrichtungen wahlweise gezogen. Der Kettenantrieb ist nicht dargestellt. Die Kette läuft innerhalb des seitlichen Raumes des Trägers 1 zwischen dem oberen und unteren Flansch nahe dem Steg.

Die Befestigungstelle 12 der Kette am Wagen befindet sich am freien Ende einer Schwinge 13 (nicht umlaufende Kurbel), die in einer etwa waagerechten Stellung am Wagen 8 angelenkt ist. Diese Anlenkstelle 14 weist eine waagerechte und zur Längsrichtung des Profils 7 rechtwinklige Drehachse auf. Die Schwinge 13 wird von einer zur Wagenseitenwandung, (17) parallelen Stahlplatte gebildet und ist aus der waagerechten Stellung nach oben um etwa 2 Grad und nach unten um etwa 6 Grad schwenkbar. Die Bewegung der Schwinge 13 nach unten wird durch einen Anschlag 15 begrenzt, der innerhalb einer seitlichen Tasche 16 liegt, die mit ihrer senkrechten, zur Schwingenfläche parallelen Seitenwandung einen seitlichen Anschlag 18 bildet, der eine Bewegung des freien Schwingenendes vom Wagen weg verhindert.

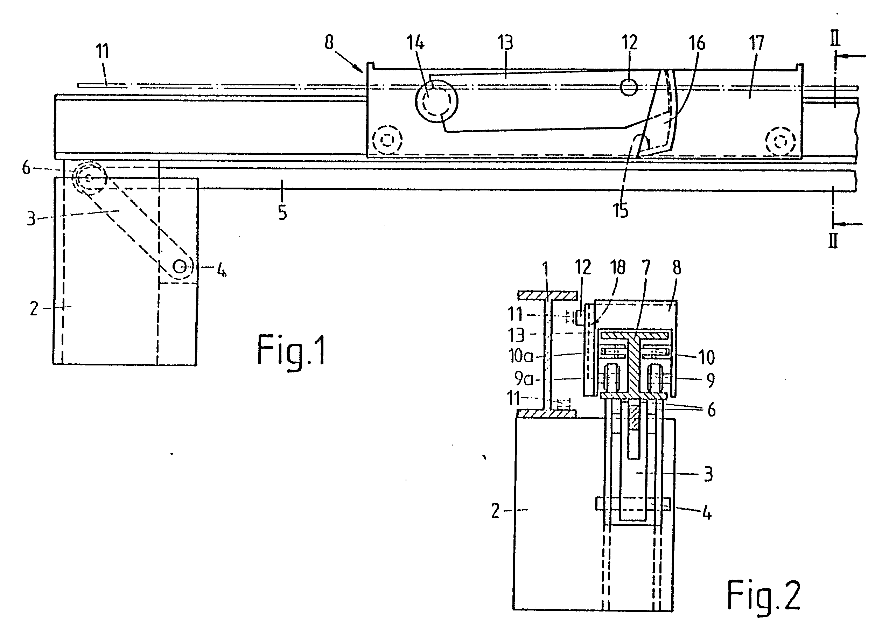

In der in den Figuren 1 und 2 gezeigten Stellung ist das Führungsprofil 7 und damit der Wagen 8 in die unterste Stellung abgesenkt, so daß die Oberseite des Wagens tiefer liegt als die Oberseite des Trägers 1 und der Wagen Material unterfahren kann, das auf den Trägern 1 liegt. Das obere Trum der Kette 11, das stets in der gleichen Höhe bleibt, hat die Schwinge 13 in die oberste Stellung bewegt, die 2° gegenüber der waagerechten Stellung abweicht. In dieser Wagen- und Schwingenstellung wird der Wagen nur durch die Kette verfahren, so daß größere Kräfte Schwinge und Wagen nicht belasten. In einer halb angehobenen Stellung des Wagens 8 (in der Zeichnung nicht dargestellt) liegt die Schwinge 13 mit ihrer Längsachse in einer waagerechten Stellung, wobei Befestigungsstelle und Anlenkachse in derselben Höhe sind. In dieser halb angehobenen Stellung kann der Wagen dazu benutzt werden, mit seiner Stirnseite Material, insbesondere Profile nicht zu tragen sondern vor sich hinzustoßen und insbesondere Träger gegen eine seitliche Begrenzungsfläche einer Rollenbahn zu stoßen. Dies läßt ein exaktes Ausrichten der Profile zu.

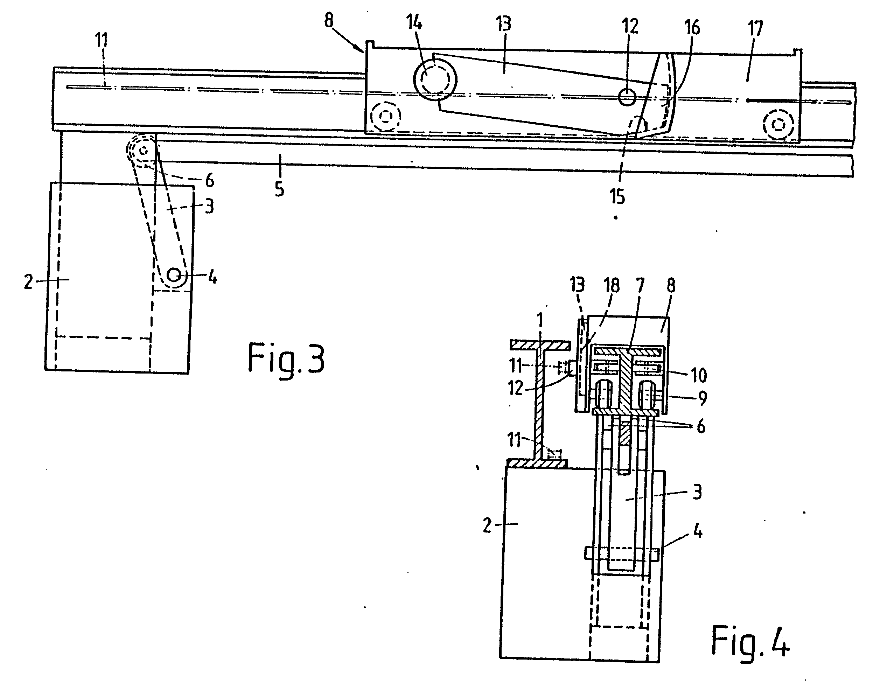

In der weitest angehobenen Stellung entsprechend den Figuren 3 und 4 wird Material transportiert als auch durch Stoßen mit der Stirnseite ausgerichtet.

**Patentansprüche**

1. Vorrichtung zum waagerechten Transport von langgestreckten Gütern, wie Profilen und Flacherzeugnissen, insbesondere von Stäben und Blechen quer zu ihrer Längsrichtung, mit quer zur Längsrichtung in Abständen zueinander parallel angeordneten Trägern (1), deren Länge etwa dem Transportweg entspricht und auf die die langgestreckten Güter ablegbar sind, und mit parallel zu den Trägern (1), insbesondere neben jedem Träger (1) über etwa dieselbe Länge angeordneten, in der Höhe verstellbaren Führungsprofilen (7), an oder auf denen Wagen oder Schlitten (8) längs des Führungsprofils (7) beweglich geführt und durch ein Zugmittel, insbesondere ein Kette (11) gezogen werden, dadurch gekennzeichnet, daß seitlich am Wagen (8) oder Schlitten eine einarmige Schwinge (13) angelenkt ist, deren waagerechte Anlenkachse (14) rechtwinklig zur Fahrtrichtung des Wagens liegt und an deren freiem Ende das Zugmittel (11) befestigt ist, und daß die Schwinge (13) bei Anheben des Wagens (8) nach unten gegen einen am Wagen befestigten Anschlag (15) schwenkbar ist.

2. Vorrichtung nach Anspruch 1, dadurch gekennzeichnet, daß die Schwinge (13) von einer Platte gebildet ist, die parallel zur Seitenwandung (17) des Wagens (8) liegt.

3. Vorrichtung nach Anspruch 1 oder 2, dadurch gekennzeichnet, daß am freien Ende der Schwinge (13) auf der der Seitenwandung (17) des Wagens (8) abgewandten Seite eine am Wagen befestigte Führungsfläche (18) angeordnet ist.

4. Vorrichtung nach Anspruch 3, dadurch gekennzeichnet, daß der am Wagen befestigte Anschlag (15) und/oder die am Wagen befestigte Führungsfläche (18) von einer Tasche (16) der Seitenwandung (17) des Wagens gebildet ist bzw. sind.

5. Vorrichtung nach einem der Ansprüche 1 bis 4, dadurch gekennzeichnet, daß die Schwinge (13) um einen Drehwinkel von 4 bis 20 Grad, insbesondere 6 bis 12 Grad, verschwenkbar ist.

6. Vorrichtung nach einem der Ansprüche 1 bis 5, dadurch gekennzeichnet, daß die Träger (1) auf die die zu transportierenden Güter ablegbar sind, Doppel-T-Träger sind.

7. Vorrichtung nach dem Anspruch 6, dadurch gekennzeichnet, daß die Befestigungsstelle (12) des Zugmittels (11) an der Schwinge (13), und damit das Zugmittel (11) im seitlichen Zwischenraum des Trägers (1) zwischen seinem oberem und seineren unterem Flansch angeordnet sind.

8. Vorrichtung nach Anspruch 7, dadurch gekennzeichnet, daß die Kette (11) im seitlichen Zwischenraum des Trägers (1) zwischen oberem und unterem Flansch geführt ist.

9. Vorrichtung nach einem der Ansprüche 1 bis 8, dadurch gekennzeichnet, daß die Führungsprofile (7) durch eine Parallelkurbel (3, 5) höhenverstellbar sind, deren Koppel (5) ständig parallel zum Führungsprofil (7) verläuft.

10. Vorrichtung nach Anspruch 9, dadurch gekennzeichnet, daß die Koppel (5) oberhalb der Gelenkstellen (4) der Kurbeln (3) und unterhalb des Führungsprofils (7) angeordnet ist.

11. Vorrichtung nach Anspruch 9 oder 10, dadurch gekennzeichnet, daß die Anlenkstellen zwischen der Koppel (5) und den Kurbeln (3) Rollen (6) tragen, die am der Unterseite des Führungsprofils (7) anliegen.

12. Vorrichtung nach einem der Ansprüche 9 bis 11, dadurch gekennzeichnet, daß an eine der Kurbeln (3) zu ihrer Betätigung ein Zylinder-Kolben-Aggregat angelenkt ist.

## Claims

1. A device for horizontally transporting elongate products such as sections and flat stock, in particular bars and sheets, transversely of their length with relatively parallel bearers (1) spaced transversely of the longitudinal direction, corresponding in length substantially to the transporting distance and on which the elongate products can be deposited, and with guide profiles (7) arranged parallel with said bearers (1), particularly alongside each bearer (1), over approximately the same length and being adjustable in height, and along, or on which trolleys or sledges (8) are flexibly guided along the length of the guide section (7) and pulled by traction means, particularly a chain (11), characterised in that a single-armed rocker (13) is hinged laterally to the trolley (8) or sledge with the horizontal hinge axis (14) extending at right angles to the direction of trolley travel, the traction means (11) being secured to the free end of the rocker, and in that, on lifting of the trolley (8), the rocker is adapted to pivot downwards against an end stop (15) which is fixed to or on the trolley (8).

2. A device according to Claim 1, characterised in that the rocker (13) is formed by a plate extending parallel with the side walls (17) of the trolley (8).

3. A device according to Claim 1 or 2, characterised in that a guide face (18) which is fixed to the trolley is arranged at the free end of the rocker (13) on that side thereof which is remote from the side walls (17) of the trolley (8).

4. A device according to Claim 3, characterised in that the end stop (15) which is fixed on the trolley and/or the guide face (18) which is fixed to the trolley is/are formed by a pocket (16) of the trolley side walls (17).

5. A device according to any of Claims 1 to 4, characterised in that the rocker (13) is adapted to pivot through an angle of 4 to 20°, particularly of 6 to 12°.

6. A device according to any of Claims 1 to 5, characterised in that the bearers (1) on which the products to be transported can be deposited are double T-sections.

7. A device according to Claim 6, characterised in that the securing point (12) of the traction means (11) on the rocker (13) and with it the traction means (11) are arranged in the lateral clearance of the bearer (1) between its upper and lower flanges.

8. A device according to Claim 7, characterised in that the chain (11) is guided in the lateral gap of the bearer (1) between the upper and lower flange.

9. A device according to any one of Claims 1 to 8, characterised in that the guide sections (7) are adjustable in height by means of a parallel crank (3, 5) the coupling (5) of which always extends parallel with the guide section (7).

10. A device according to Claim 9, caracterised in that the coupling (5) is arranged above the articulation points (4) of the cranks (3) and below the guide section (7).

11. A device according to Claim 9 or 10, characterised in that the articulation points between the coupling (5) and the cranks (3) carry rollers (6) which engage with the underside of the guide section (7).

12. A device according to any of Claims 9 to 11, characterised in that a cylinder/piston unit is hinged to one of the cranks (3) for their actuation.

## Revendications

1. Dispositif pour le transport horizontal de produits allongés, tels que des profilés et des produits laminés plats, en particulier des barres et des tôles, transversalement à leur direction longitudinale, avec des longerons (1) disposés parallèles transversalement à la direction longitudinale à distance les uns des autres, dont la longueur correspond sensiblement au chemin de transport et sur lesquels les produits allongés peuvent être déposés, et avec des profilés de guidage (7) réglables en hauteur disposés parallèlement aux longerons (1), en particulier à côté de chaque longeron (1) sur sensiblement la même longueur, auxquels ou sur lesquels des chariots ou des traîneaux (8) sont guidés le long due profilé de guidage (7) et sont tirés par un moyen de traction, en particulier une chaîne (11), caractérisé par le fait qu'une manivelle (15) à un seul bras est articulée latéralement au chariot (8) ou au traîneau, dont l'axe d'articulation horizontal (14) se trouve perpendiculaire à la direction de déplacement du chariot et à l'extrémité libre de laquelle est fixé le moyen de traction (11), et que la manivelle (13) peut pivoter vers le bas contre une butée (15) fixée au chariot, lors du soulèvement du chariot (8).

2. Dispositif selon la revendication 1, caractérisé par le fait que la manivelle (15) est formée par une plaque qui est logée parallèlement à la paroi latérale (17) du chariot (8).

3. Dispositif selon la revendication 1 ou 2, caractérisé par le fait qu'une surface de guidage (18) fixée au chariot (8) sur la face opposée à la paroi latérale (17) du chariot (8) est disposée à l'extrémité libre de la manivelle (13).

4. Dispositif selon la revendication 3, caractérisé par le fait que la butée (15) fixée au chariot et/ou la surface de guidage (18) fixée au chariot sont formées par une poche (16) de la paroi latérale (17) du chariot.

5. Dispositif selon l'une des revendications 1 à 4, caractérisé par le fait que la manivelle (13) peut pivoter d'un angle de 4 à 20 degrés, en particulier de 6 à 12 degrés.

6. Dispositif selon l'une des revendications 1 à 5, caractérisé par le fait que les longerons (1), sur lesquels peuvent être posés les produits à transporter, sont des longerons en double T.

7. Dispositif selon la revendication 6, caractérisé par le fait que le point de fixation (12) du moyen de traction (11) sur la manivelle (13), et avec lui le moyen de traction (11), sont disposés dans l'espace intermédiaire latéral du longeron (1) entre son aile supérieure et son aile inférieure.

8. Dispositif selon la revendication 7, caractérisé par le fait que la chaîne (11) est guidée dans l'espace intermédiaire latéral du longeron (1) entre son aile supérieure et son aile inférieure.

9. Dispositif selon l'une des revendications 1 à 8, caractérisé par le fait que les profilés de guidage (7) peuvent être réglés en hauteur au moyen d'un manivelle double (3, 5) dont la bielle (5) se déplace toujours parallèlement au profilé de guidage (7).

10. Dispositif selon la revendication 9, caractérisé par le fait que la bielle (5) est disposée au-dessus des points d'articulation (4) des manivelles (3) et au-dessous du profilé de guidage (7).

11. Dispositif selon la revendication 9 ou 10, caractérisé par le fait que les points d'articulation entre la bielle (5) et les manivelles (3) portent des rouleaux (6) qui coopèrent avec la face inférieure du profilé de guidage (7).

12. Dispositif selon l'une des revendications 9 à 11, caractérisé par le fait qu'un vérin est articulé à l'une des manivelles (3) pour son actionnement.

Fig.1

Fig.2

0 083 751

Fig.3

Fig.4

0 083 751